# EUROPÄISCHE PATENTSCHRIFT

(11) **EP 1 005 175 B1**
(45) Veröffentlichungstag und Bekanntmachung des Hinweises auf die Patenterteilung: **12.10.2005**
(21) Anmeldenummer: 99122887.5
(22) Anmeldetag: 18.11.1999
(51) Int. Cl.: H04B 7/04, H01Q 1/28

(54) **Verfahren zur Antennen-Ausrichtung zur Datenübertragung zwischen sich bewegenden Fahrzeugen und Vorrichtung zur Durchführung des Verfahrens**
Method for data transmission with directional antennas between moving vehicles and device therefor
Procédé de transmission de données avec antennes directionnelles pour des véhicules en mouvement et dispositif mettant en oeuvre un tel procédé

(30) Priorität: 23.11.1998 DE 19853905
(43) Veröffentlichungstag der Anmeldung: 31.05.2000
(73) Patentinhaber: EADS Deutschland GmbH, 85521 Ottobrunn (DE)
(72) Erfinder: Mehltretter, Ludwig, 85521 Riemerling (DE)

(56) Entgegenhaltungen:
- US-A- 3 833 904
- US-A- 5 303 240
- PATENT ABSTRACTS OF JAPAN vol. 1998, no. 14, 31. Dezember 1998 (1998-12-31) & JP 10 256971 A (NIPPON TELEGR &TELEPH CORP <NTT>), 25. September 1998 (1998-09-25)

## Beschreibung

Die Erfindung betrifft ein Verfahren zum Aufbau und zur Durchführung einer Nutzdaten-Übertragung zwischen sich relativ zueinander bewegenden Fahrzeugen oder Flugzeugen mittels einer Anordnung von Teil-Antennen. Die Erfindung betrifft ferner eine Vorrichtung zur Durchführung dieses Verfahrens.

Die Anforderungen an die Datenübertragung zwischen Fahrzeugen, insbesondere Luftfahrzeugen, sind auf die Übertragbarkeit immer größerer Datenraten beispielsweise zur Übertragung von Fernsehbildern gerichtet. Für derartige Breitbandübertragungen stehen jedoch im unteren Frequenzbereich kaum Übertragungskanäle mit ausreichender Bandbreite zur Verfügung. Bei der Übertragung mit höheren Übertragungsfrequenzen tritt jedoch eine erhöhte Grundübertragungs- oder Freiraum-Dämpfung auf, wodurch mit zunehmender Übertragungsfrequenz eine zunehmende Sendeleistung erforderlich ist. Eine Folge dieser erhöhten Freiraum-Dämpfung ist, daß die Reichweite für eine derartige Datenübertragung zu gering ist.

Um für diese Anwendung die Sende-Leistung in Grenzen zu halten bzw. die Reichweite der Datenübertragung zu erhöhen, ist der Einsatz von Antennen mit höherem. Gewinn, also von gerichtete Antennen, zwingend erforderlich. Zum Einsatz derartiger Antennen für sich bewegende Fahrzeuge ist ein Verfahren bzw. eine Vorrichtung zur Ausrichtung dieser Richtantennen erforderlich.

Es sind Verfahren zum Ausrichten oder Einstellen von Richtantennen bekannt, die auf dem Austausch entsprechender Informationen über die Richtung, Lage und Position der jeweils in einer Übertragung zugeordneten Richtantennen basieren. Nachteilig an diesem Verfahren ist, daß diese Informationen oftmals nicht vollständig bekannt sind und in der Regel aus Sicherheitsgründen auch nicht übertragen werden sollen.

Außerdem sind Verfahren zur Nachführung von Antennen mit Hilfe von Servosystemen, z.B. sogenannte Monopuls- und Keulennutations-Verfahren bekannt. Bei diesen Verfahren wird ein Stellsignal aus den Pegeln des Pegels des empfangenen Signals abgeleitet, das die Antennen kontinuierlich auf das Maximum der Antennenkeule nachführt. Diese Verfahren sind in der Regel sehr aufwendig und vor allem für die genaue Nachführung im Gradbereich oder darunter geeignet. Es setzt voraus, daß die Grobausrichtung bekannt ist oder das System bereits auf die Grobausrichtung voreingestellt ist.

Aus der US-A-3 833 904 (Gebhardt R. et al) ist ein Radarsystem für Flugzeuge bekannt geworden, welches zur Rundum-Überwachung ein Suchsignal zur Erfassung und Verfolgung von Zielen aussendet. Ein Aufbau einer Richtfunkstrecke zwischen sendendem Flugzeug und erfasstem Ziel ist nicht vorgesehen.

Die Druckschrift Patent US-A- 5 303 240 (Borras Jaime A. et al) beschreibt ein schnurloses Telekommunikationssystem zur Informationsübertragung zwischen einer Basisstation und einer mobilen Station. Hierbei wird die Kommunikationsverbindung mit der georteten Gegenstelle ausschließlich in Hinblick auf die qualitativ beste Verbindung ausgewählt.

Aufgabe der Erfindung ist es daher, ein Verfahren bzw. eine Vorrichtung zur automatischen Antennen-Ausrichtung und -Umschaltung zur Datenübertragung zwischen sich bewegenden Fahrzeugen zu schaffen, bei denen grundsätzlich nur wenige oder keine Informationen in Bezug auf die Position und die Richtung der jeweils in der Übertragung zugeordneten Richtantennen erforderlich ist, wobei möglichst schnell eine Richtfunkverbindung zwischen sich unabhängig voneinander bewegenden Fahrzeugen erzeugt wird und damit trotz der Relativbewegung der Fahrzeuge zueinander eine Übertragung von Daten in andere Richtungen vermieden werden kann.

Eine weitere Aufgabe der Erfindung ist die Anwendung der Antennen-Umschaltung zur Auswahl einer ganz bestimmten Gegenstelle, mit der die Kommunikation durchgeführt werden soll. Die Auswahl der Gegenstelle soll nach Maßgabe einer Kennung der jeweiligen Gegenstelle erfolgen.

Diese Aufgabe wird mit den Merkmalen der unabhängigen Ansprüche gelöst. Alternative Ausführungsformen sind in den Unteransprüchen angegeben.

Ein Vorteil der Erfindung ist, daß ohne die Verwendung von Antennen mit Kugelstrahlcharakteristik der gesamte Bereich um das jeweilige Fahrzeug herum mit der erfindungsgemäßen Antennenanordnung abgedeckt wird. Dabei wird jeder Antenne einer Antennen-Anordnung ein verhältnismäßig preisgünstiger Empfänger zugeordnet, der zur Übertragung entsprechender Kennungs- und Steuersignale nur relativ schmalbandig sein muß. Für die eigentliche Datenübertragung ist nur ein Breitband-Empfänger für die gesamte Antennenanordnung jeweils eines Fahrzeugs erforderlich. Dadurch wird die gesamte Antennenanordnung verhältnismäßig preisgünstig.

Die Erfindung wird im Folgendenden anhand der Figuren 1-6 beschrieben, die zeigen:
Figur 1 zwei miteinander im Datenaustausch stehende Flugzeuge, an denen jeweils sechs erfindungsgemäße Antennenanordnungen angeordnet sind,
Figur 2 zwei Beispiele für die Abstrahl-Charakteristik oder Antennendiagramme jeweils einer Antennenanordnung nach der Figur 1,
Figur 3 eine Anordnung von 2 Parabolspiegeln, denen jeweils eine Anordnung mit jeweils 6 Teil-Antennen oder Erregern zugeordnet ist,
Figur 4 eine Anordnung von 2 Parabolspiegeln in Cassegrain-Ausführung, wobei jedem Parabolspiegel jeweils 6 Teil-Antennen oder Erreger zugeordnet sind,
Figur 5 Antennen-Diagramme jeweils einer Antennenanordnung nach der Figur 3 oder 4, und
Figur 6 ein schematisches Blockschaltbild für die erfindungsgemäße Vorrichtung zur automatischen Antennen-Ausrichtung.

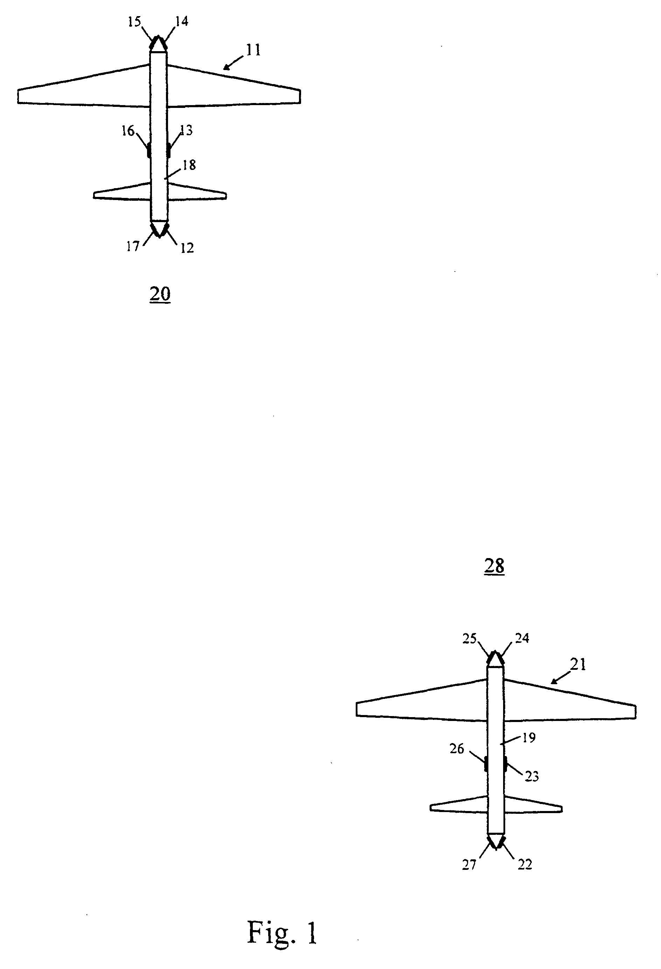

Die Figur 1 zeigt eine erste Antennenanordnung 11 mit den Antennen, nachstehend Teil-Antennen oder Teilerreger 12, 13, 14, 15, 16 17 genannt, die in der Figur 1 beschriebenen Ausführungsform über die Umfangsfläche eines Flugzeug-Rumpfes 18 eines ersten Fahrzeuges oder Flugzeuges 20 angebracht sind. In der Figur 1 ist weiterhin eine zweite Antennenanordnung 21 mit den Teil-Antennen oder Teilerregern 22, 23, 24, 25, 26, 27 dargestellt, die an dem Rumpf 19 eines zweiten Fahrzeuges oder Flugzeuges 28 angebracht sind.

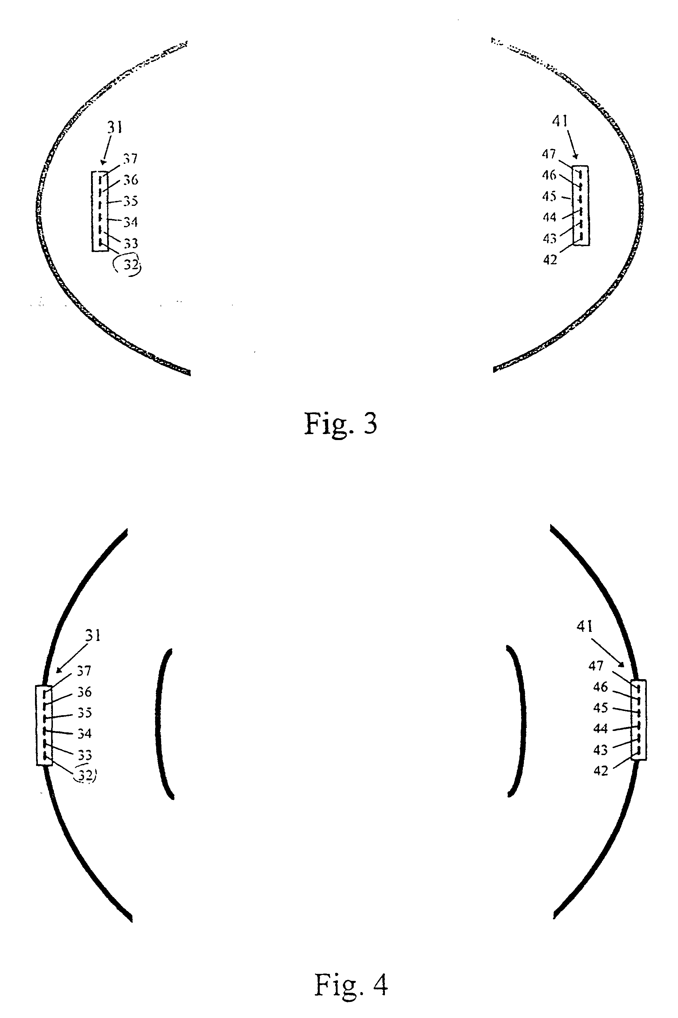

Analog zu der in der Figur 1 gezeigten Antennen-Anordnung 11, 21 kann jede oder einige dieser Teil-Antennen 12, 13, 14, 15, 16 bzw. 22, 23, 24, 25, 26, 27 des ersten 20 bzw. zweiten 28 Flugzeugs durch eine in den Figuren 3 oder 4 gezeigten Antennen-Anordnungen 31 bzw. 41 ersetzt werden.

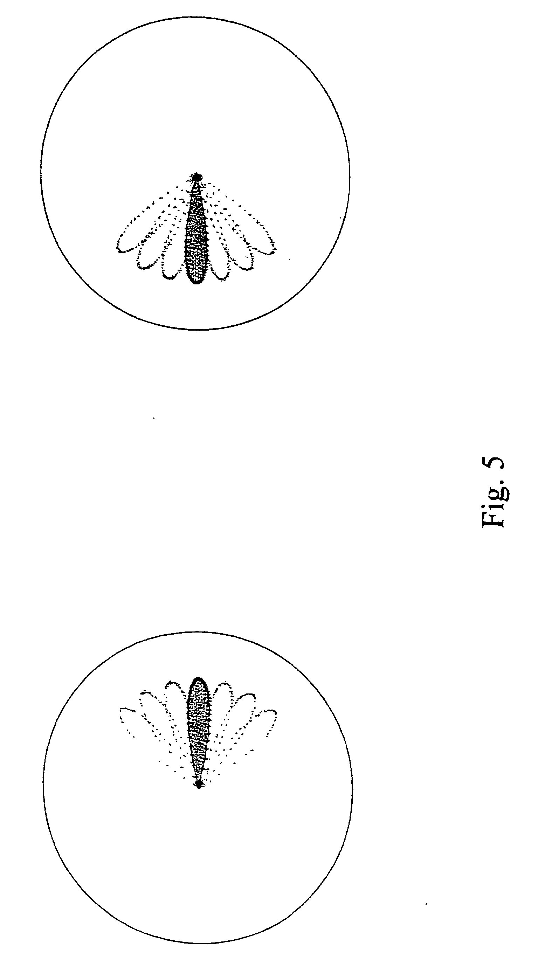

Analog zu den in der Figur 1 gezeigten Antennenanordnungen 11, 21 ist auch in der Figur 3 und der Figur 4 eine erste Antennenanordnung 31 mit den Teilantennen oder Teilerregern 32, 33, 34, 35, 36 und 37, sowie eine zweite Antennenanordnung 41 mit den Teil-Antennen oder Teilerregern 42, 43, 44, 45, 46 und 47 gezeigt. In der Figur 5 sind die Antennen-Diagramme dargestellt, die bei einer Anordnung mit Parabol-Antennen z.B. gemäß der Figur 3 oder 4 entstehen, wobei die Parabol-Antennen auch nach dem Cassegrain-Pinzip ausgeführt sein können.

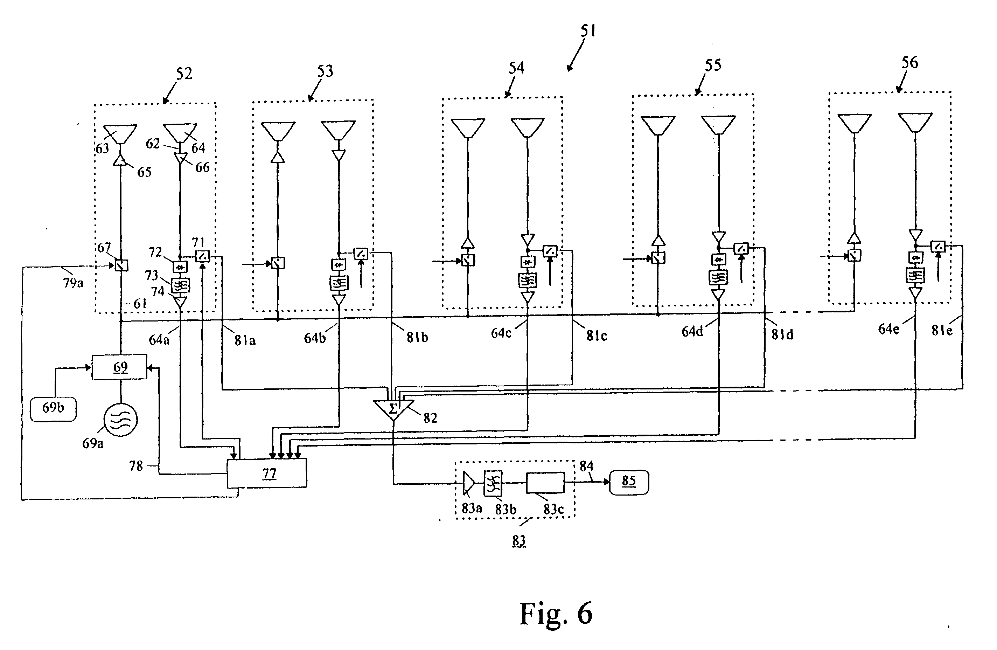

In der Figur 6 ist ein Blockschaltbild des erfindungsgemäßen Antennen-Ausrichtungssystems 51 gezeigt, das in den im Austausch stehenden Fahrzeugen, also sowohl im jeweils sendenden Fahrzeug als auch im jeweils empfangenden Fahrzeug vorhanden ist. Das Antennen-Ausrichtungssystem umfaßt mehrere Funktionsgruppen oder End-Geräte 52, 53, 54, 55, 56, wobei jede Funktionsgruppe in die Teil-Antenne integriert ist. Jede Funktionsgruppe, z. B. die Funktionsgruppe 52, umfaßt einen Sendezweig 61 und einen Empfangszweig 62. Das jeweilige Ende des Sendezweigs 61 bzw. der Anfang des Empfangszweiges 62 ist an diejenige Teil-Antenne oder denjenigen Teilerreger angeschlossen, der oder dem die jeweilige Funktionsgruppe 52 zugeordnet ist. Die z.B. der Funktionsgruppe 52 jeweils zugeordnete Teil-Antenne ist in der Darstellung nach der Figur 6 mittels zweier Symbole dargestellt, nämlich einer Sendeantenne 63 und einer Empfangsantenne 64, wobei die Sendeantenne 63 und die Empfangsantenne 64 gerätetechnisch vorzugsweise von einer Teil-Antenne, z. B. der Teil-Antenne 15 der Figur 1 oder z.B. der Teil-Antenne 32 der Figuren 3 oder 4, gebildet wird. Unmittelbar an der Sendeantenne 63 und an der Empfangsantenne 64 ist jeweils ein Verstärker 65 bzw. 66 angeordnet. Im Sendezweig 61 ist von der Sendeantenne 63 aus gesehen vor dem Verstärker 65 ein Schalter 67 vorgesehen, von wo aus die Leitung des Sendezweigs 61 zu einem Modulator 69 gelangt. Unter Schalter 67 wird in diesem Zusammenhang eine Einrichtung verstanden, die die ausgewählte Sende-Antenne zuschaltet. Dabei kann die Schaltfuktion des Schalters 67 auch durch Ein- und Ausschalten der Versorgungsspannung des Verstärkers 65 realisiert sein. Der Modulator 69 wird von einem Hochfrequenzgenerator 69a gespeist. Die über dem Sendezweig 61 zu versendenden Nutzdaten werden dem Modulator 69 von einer entsprechenden Nutzdatenquelle 69b zugeführt. Im Empfangszweig 62 verzweigt das Signal von der Empfangsantenne 64 aus gesehen hinter dem Verstärker 66 auf einen Gleichrichter 72, einen Filter und insbesondere einen Tiefpassfilter 73 sowie einen Niederfrequenz-Verstärker 74. Dieses Signal bildet das zur Antennen-Umschaltung erforderliche Steuersignal 64a, das in eine Steuereinheit 77 mündet, die selbst wiederum eine Leitung 78 zum Modulator 69 besitzt und der Leitungen zum Schalten der Schalter 67 bzw. 71 zugeordnet sind.

Die Funktionsgruppen 52, 53, 54, 55, 56 weisen vorzugsweise jeweils denselben Aufbau und die gleichen Komponenten mit gleichen Funktionen auf. Dementsprechend sind Komponenten in den verschiedenen Funktionsgruppen der Figur 6, die die gleiche Funktion besitzen, mit demselben Bezugszeichen dargestellt. Entsprechende Verbindungen zwischen einer Funktionsgruppe 52, 53, 54, 55, 56 und der Steuereinheit 77 sind vorgesehen (nicht in der Figur 6 dargestellt).

Die Steuereinheit 77 steht über entsprechende Leitungen 79 mit jedem der Schalter 67 des Sendezweigs 61 jeder Funktionsgruppen 52, 53, 54, 55, 56 in Verbindung. Dadurch ist die Steuereinheit 77 in der Lage, zumindest einen Sendezweig 61 bzw. zumindest eine Teil-Antenne 63 einer Antennenanordnung 11, 21, 31, 41 zu aktivieren. Jeder Schalter 71 einer Funktionsgruppe 52, 53, 54, 55, 56 ist jeweils über eine Leitung 81a, 81b, 81c, 81d, 81e mit einer Summenschaltung 82 verbunden, die wiederum mit einem Empfänger 83 in Verbindung steht. Der Summenverstärker, der die einzelnen Signale voneinander trennt, kann in einer einfacheren Ausführung durch einen Summenpunkt ersetzt werden, wenn auf den gleichzeitigen Empfang von zwei beispielsweise benachbarten Antennen verzichtet wird. Der Empfänger 83 ist vorzugsweise ein Breitbandempfänger und weist vorzugsweise einen Verstärker 83a, eine Filtereinrichtung 83b und einen Demodulator 83c auf. Vom Demodulator 83c verläuft eine Leitung 84 zu einer Nutzdaten-Senke oder einem Verbraucher 85.

Dadurch, daß die Funktionsgruppen 52, 53, 54, 55, 56 der Antennen-Einheiten jeweils an oder in eine Teil-Antenne 12 integriert sind, kann die Dämpfung von Zuleitungen oder Netzwerken, die mit den End-Verstärkern 65 bzw. den Vorverstärkern 66 verbunden sind, eleminiert werden. Dadurch kann eine beträchtliche Verbesserung der Systemempfindlichkeit und eine Verringerung des Stromverbrauchs gegenüber dem Stand der Technik erreicht werden. Die Funktionsgruppen 52, 53, 54, 55, 56 werden zweckmäßigerweise in preisgünstiger Chip- oder SMD-Technologie hergestellt und in die Antennenleiterplatten (nicht gezeigt) integriert oder eingebettet.

Jede Teilantenne 64 kann mittels den jeweils zugeordneten Funktionsgruppen 52, 53, 54, 55, bzw. 56 des Empfangszweigs 62 und der Steuereinheit 77 auf einen schmalbandigen Steuermode oder einen breitbandigen Datenübertragungsmode geschaltet werden. Im Normalfall, also vor der Übertragung der Nutzdaten, ist jede Funktionsgruppe 52, 53, 54, 55, 56 parallel, d. h. zeitgleich auf den schmalbandigeren und empfindlicheren Steuermode geschaltet. In diesem Fall fließen die Steuer-Daten von den Empfangs-Antennen 64 aus über die Empfangszweige 62 in die Leitungen 64a, 64b, 64c, 64d, 64e, über die die Steuersignale in die Steuereinheit 67 gelangen. Die für diesen schmalbandigen und daher empfindlichen Steuerkanal vorgesehenen Elemente, wie der Verstärker 66, das Filter 72 und der NF-Verstärker 74 erfordern nur geringe Versorgungsleistung. Um die Schaltungen bzw. Bauteile einfach zu halten, sind die Signale in diesem schmalbandigen Steuermodus nur amplituden- bzw. pulsmoduliert.

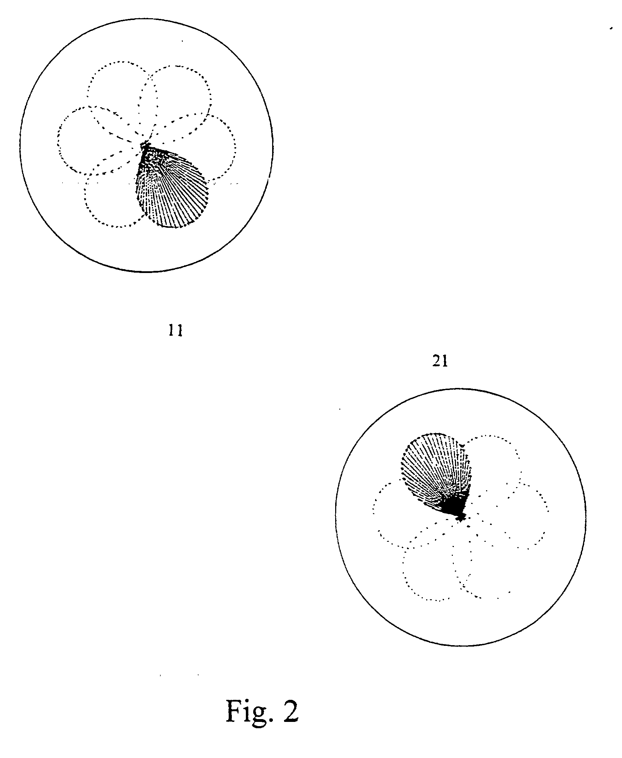

Der schmalbandige Steuermodus dient dazu, festzustellen, ob von anderen Fahrzeugen, d. h. von deren Sendern Daten gesendet werden und insbesondere aus welcher Richtung die Daten jeweils gesendet werden. Die Teil-Antennen 12, 13, 14, 15, 16, 17; 22, 23, 24, 25, 26, 27 der jeweiligen Antennenanordnung 11, 21, 31 bzw. 41 bzw. die Teilerreger 32, 33, 34, 35, 36, 37; 42, 43, 44, 45, 46, 47 der jeweiligenAntennenanordnung sind derart angeordnet, daß sich die Antennen-Diagramme der jeweiligen Antennen-Anordnung 11, 21, 31, 41, die über einen großen Winkelbereich ausgerichtet sind, sich auch in vorbestimmter Weise gegenseitig überlappen. Dadurch wird sichergestellt, daß jede Antennenanordnung 11, 21, 31, 41 einen weiten Bereich oder zumindest einen Bereich überdeckt, der den für die Nutzdaten-Übertragung in Betracht kommenden Winkelbereich umfaßt (Figur 2). Wenn also ein Sender aus einer Strahlrichtung sendet, die zumindest von einem Teil der Antennendiagramme einer Antennenanordnung 11, 21, 31, 41 abgedeckt wird, stellt das Antennenausrichtungs-System 51 mittels des schmalbandigen Steuermodus fest, daß und aus welcher Richtung Daten gesendet werden sollen. Zur Steuer- und Richtungsbestimmung wird vorzugsweise von der jeweils sendenden Station ein entsprechendes Rufzeichen der empfangenden Station sowie ein Rufzeichen der eigenen sendenden Station gesendet. Dieser Ruf wird vorzugsweise nacheinander, d.h. die Umschaltung erfolgt nach jedem Steuerwort oder durch rasches Umschalten innerhalb eines Bits über jede der verschiedenen Teil-Antennen der sendenden Station bzw. des sendenden Antennen-Ausrichtungssystems 51 ausgesendet.

Alle empfangenden Teil-Antennen oder in Bezug auf die sendende Station vorhandenen Gegenstellen des empfangenden Fahrzeugs, empfangen die Signale der jeweils sendenden Station oder der jeweils sendenden Antennenanordnung, wobei die jeweils angesprochene Gegenstelle aufgrund der empfangenen Rufsignale merkt, wenn sie angesprochen worden ist. Daraufhin antwortet nur die angesprochene Gegenstelle, und zwar mit derjenigen Teil-Antenne, mit der das Rufsignal empfangen wurde. Es wird also nur in die Richtung geantwortet, von der das Rufsignal empfangen wurde. Empfangen mehrere Teil-Antennen jeweils einer Antennenanordnung gleichzeitig Rufsignale, wird diejenige Teil-Antenne ausgewählt, die das größte bzw. stärkste Signal empfangen hat. Alternativ dazu können auch mehrere Teil-Antennen ausgewählt werden, bei der ein vorgegebener Mindest-Pegel des empfangenen Signals erreicht worden ist. Sollte dieser Mindestpegel bei mehreren, z.B. benachbarten Teil-Antennen erreicht werden, können diese auch im Breitband-Kanal für die Nutzdaten-Übertragung auf den Summenverstärker über die Schalter 71 durchgeschaltet werden. Dabei muß allerdings Phasengleichheit zwischen den Teilantennen und dem Summenverstärker herrschen. Das Antwortsignal enthält sowohl die Kennung der zuvor sendenden Station, als auch die Kennung der antwortenden Station.

Die das Antwortsignal empfangende und ursprünglich oder zuvor sendende Station bestimmt wiederum in beschriebener Weise die Richtung, aus der das Signal empfangen wurde, d. h. sie bestimmt die Teilantenne der jeweiligen Antennenanordnung mit dem stärksten Signal.

Der schmalbandige Steuermode dient also nur dazu, diejenige Teilantenne einer Antennenanordnung auszuwählen, deren Antennen-Diagramm am ehesten in die Richtung weist, von der ein Rufsignal empfangen worden ist. Durch die zusätzlich mitgeteilte Kennung der jeweiligen Stationen werden nur die für die Datenverbindung gewünschten Stationen ausgewählt.

Sobald das Antennen-Ausrichtungssystem 51 ein Rufsignal von einer sendenden Station oder einem sendenden Antennennachführungssystem erhalten hat und diejenige Teilantenne ausgewählt worden ist, die das größte Signal empfangen hat, schaltet das empfangende Antennen-Ausrichtungssystem 51 vom Steuermode oder Steuerbetrieb in den Datenübertragungs-Betrieb um. Im Datenübertragungs-Betrieb erfolgt eine breitbandige Übertragung, und zwar mit der vollen Datenrate und auch mit einer anderen Modulationsart, als sie für den Steuerbetrieb erforderlich ist. Dadurch, daß zur eigentlichen Datenübertragung gerichtete Antennen bei höherer Übertragungs-Bandbreite verwendet werden, werden zur Datenübertragung größere Reichweiten bei einer verhältnismäßig geringen Sendeleistung erzielt. Da für die Datenübertragung ein verhältnismäßig aufwendiger Empfänger 83, der zur Breitband-Übertragung geeignet ist, erforderlich ist, ist dieser je Fahrzeug bzw. Flugzeug 20, 28auch nur einmal vorhanden. Dieser Empfänger 83 ist, wie in der Figur 6 dargestellt, den verschiedenen Funktionsgruppen 52, 53, 54, 55, 56 und damit jeder Teil-Antenne einer Antennenanordnung zugeordnet.

In einer alternativen Ausführungsform für den Betrieb von mehreren unterschiedlichen Datenstrecken kann jedoch auch mehr als ein Empfänger 83 innerhalb eines Antennen-Ausrichtungssystems 51 verwendet werden. Dazu ist pro zusätzlichen Empfaänger ein Summenverstärker 82 und je Antenneneinheit 52, 53, 54, 55, 56 ein zusätzlicher Schalter 71 erforderlich. Dabei ist jedoch die Zahl der Empfänger 83 innerhalb eines Antennen-Ausrichtungssystems 51 im Verhältnis zu den Funktionsgruppes 52, 53, 54, 55, 56 deutlich geringer. Zur Erhöhung der Datensicherheit werden aufwendigere Modulationsarten als im Steuerbetrieb verwendet, z. B. Frequenz-, Phasen-, Spreadspektrum oder ähnliche Modulationen verwendet. Die übertragenen Daten können aus Sicherheitsgründen außerdem zusätzlich verschlüsselt werden.

Die Datenübertragung erfolgt vorzugsweise auf folgende Weise: Die jeweils sendende Station oder das jeweils sendende Antennen-Ausrichtungssystem 51 überträgt einen Block von Daten an das jeweils empfangende Antennen-Ausrichtungssystem 51. Zur Überprüfung oder auch zur Korrektur der Übertragungsrichtung wird das im Steuerbetrieb von der sendenden Station gesendete Rufzeichen wiederholt, so daß die korrekte Übertragungsrichtung bestätigt oder wie voranstehend beschrieben korrigiert wird. Ein zusätzliches Zeichen bestätigt die korrekte Übertragung des Datenblocks durch die Überprüfung von Format-Syntax, Parity etc. oder fordert die Wiederholung des soeben gesendeten Datenblocks. Wird anschließend eine Übertragung oder Antwort in die Gegenrichtung, also von dem vormals empfangenden zum vormals sendenden Antennen-Ausrichtungssystem 51, erforderlich, wird dies durch ein entsprechendes Zeichen angekündigt. Nach diesem Rufzeichen oder dieser Ankündigung sendet das jeweils sendende Antennen-Ausrichtungssystem 51 einen weiteren Block von Daten. Diese Vorgänge können mehrmals wiederholt werden. Nach Beendigung der Übertragung werden die jeweils kommunizierenden Antennen-Ausrichtungssysteme 51 durch ein Ende-Signal wieder auf den Steuerbetrieb zurückgeschaltet.

## Patentansprüche

1. Verfahren zum Aufbau und zur Durchführung einer Nutzdaten-Übertragung zwischen sich relativ zueinander bewegenden Fahrzeugen oder Flugzeugen (20, 28) mittels einer Anordnung (11, 21, 31 , 41) von Teil-Antennen (12, 13, 14, 15, 16, 17; 22, 23, 24, 25, 26, 27; 32, 33, 34, 35, 36, 37; 42, 43, 44, 45, 46, 47; 63, 64), **gekennzeichnet durch** folgende Schritte:
- Durchführung eines schmalbandigen Steuer-Modus mit der Aktivierung einer Mehrzahl der Teil-Antennen einer Antennen-Anordnung (11, 21, 31, 41) eines suchenden Fahrzeuges (20), wobei die Teil-Antennen in vorbestimmter Weise an jedem für die Nutzdaten-Übertragung beteiligten Fahrzeug (20, 28) derart angeordnet sind, dass der für die Nutzdaten-Übertragung in Betracht kommende Winkelbereich **durch** die von der Anordnung von Teil-Antennen erzeugten Antennen-Diagramme (11, 21) abgedeckt ist,
- Übertragung eines Such-Signals über eine Mehrzahl der Teil-Antennen jeder Anordnung (11, 21, 31, 41) von Teil-Antennen zur Ermittlung der Richtung zum jeweiligen Sender bzw. Empfänger,
- Empfang eines Rufsignals von einem oder mehreren anderen an der Nutzdaten-Übertragung beteiligten Fahrzeugen (28),
- zur Nutzdaten-Übertragung bei jedem an der Kommunikation beteiligten Fahrzeug (20, 28) Auswahl und Zuschaltung derjenigen Teil-Antenne der jeweils am Fahrzeug (20, 28) angeordneten Antennen-Anordnung (11, 21, 31, 41), bei der das Rufsignal mit einem Mindest-Pegel empfangen worden ist,
- Umschalten auf breitbandige Nutzdaten-Übertragung über die im schmalbandigen Steuer-Modus zuvor ausgewählte Teil-Antenne.

2. Vorrichtung zur Durchführung des Verfahrens nach dem Anspruch 1 mit einer Anzahl von Teil-Antennen, die in vorbestimmter Weise an jedem für die Nutzdaten-Übertragung beteiligten Fahrzeug (20, 28) derart angeordnet sind, daß der für die Nutzdaten-Übertragung in Betracht kommende Winkelbereich durch die von der Anordnung von Teil-Antennen erzeugten Antennen-Diagramme abgedeckt ist,
mit einem jeder Teil-Antenne (12, 13, 14, 15, 16, 17; 22, 23, 24, 25, 26, 27; 32, 33, 34, 35, 36, 37; 42, 43, 44, 45, 46, 47; 63, 64) zugeordneten Sendezweig (61), der zum Sender durchgeschaltet werden kann
mit einem Empfangszweig (62) mit einem breitbandigen Empfänger (83), der mit einer Mehrzahl der Teil-Antennen über jeweils einen Schalter (71) in Verbindung steht und mit dem in einem Steuer-Modus gleichzeitig Rufsignale von einer Mehrzahl der Teil-Antennen empfangen werden können,
mit einer Steuer-Einheit (77), die mit einer Mehrzahl der Teil-Antennen über jeweils einen Schalter (67) in Verbindung steht, über den die Steuer-Einheit (77) den Sendezweig (61) einer Teil-Antenne aktiviert, sobald der Empfänger (83) ein Rufsignal von einer Gegenstelle empfangen hat,
wobei die Auswahl der Teil-Antenne aufgrund der Stärke des von dieser Teil-Antenne empfangenen Ruf-Signals erfolgt.

3. Vorrichtung mit einer Anzahl von Teil-Antennen nach dem Anspruch 2, **dadurch gekennzeichnet, daß** die Teil-Antennen (12, 13, 14, 15, 16, 17; 22, 23, 24, 25, 26, 27; 32, 33, 34, 35, 36, 37; 42, 43, 44, 45, 46, 47; 63, 64) TeilErreger einer Antennen-Anordnung (31, 41) eines Parabolspiegels darstellen.

## Claims

1. Method for setting up and executing a user data transmission between vehicles or aircraft (20, 28) moving relative to one another by means of an array (11, 21, 31, 41) of sub-antennas (12, 13, 14, 15, 16, 17; 22, 23, 24, 25, 26, 27; 32, 33, 34, 35, 36, 37; 42, 43, 44, 45, 46, 47; 63, 64), **characterized by** the following steps:
- implementation of a narrowband control mode with the activation of a plurality of the sub-antennas of an antenna array (11, 21, 31, 41) of a searching vehicle (20), the sub-antennas being arranged in a predetermined manner on each vehicle (20, 28) involved for the user data transmission in such a way that the angular area considered for the user data transmission is covered by the antenna patterns (11, 21) generated by the array of sub-antennas,
- transmission of a homing signal via a plurality of the sub-antennas of each array (11, 21, 31, 41) of sub-antennas to determine the direction to the respective transmitter or receiver,
- receipt of a call signal from one or more other vehicles (28) involved in the user data transmission,
- for the user data transmission in the case of each vehicle (20, 28) involved in the communication, selection and connection of that sub-antenna of the antenna array (11, 21, 31, 41) arranged respectively on the vehicle (20, 28) at which the call signal is received with a minimum level,
- changeover to broadband user data transmission via the sub-antenna selected previously in narrowband control mode.

2. Device for.executing the method according to claim 1 with a number of sub-antennas, which are arranged in a predetermined manner on each vehicle (20, 28) involved for the user data transmission in such a way that the angular area considered for the user data transmission is covered by the antenna patterns generated by the array of sub-antennas,
- with a transmit branch (61) assigned to each sub-antenna (12, 13, 14, 15, 16, 17; 22, 23, 24, 25, 26, 27; 32, 33, 34, 35, 36, 37; 42, 43, 44, 45, 46, 47; 63, 64), which branch can be connected to the transmitter
- with a receive branch (62) with a broadband receiver (83), which is connected to a plurality of sub-antennas via a switch (71) in each case and with which call signals can be received simultaneously from a plurality of sub-antennas in a control mode,
- with a control unit (77), which is connected to a plurality of sub-antennas via a switch (67) in each case, via which switch the control unit (77) activates the transmit branch (61) of a sub-antenna as soon as the receiver (83) has received a call signal from a remote terminal,
- the selection of the sub-antenna taking place on the basis of the strength of the call signal received by this sub-antenna.

3. Device with a number of sub-antennas according to claim 2, **characterized in that** the sub-antennas (12, 13, 14, 15, 16, 17; 22, 23, 24, 25, 26, 27; 32, 33, 34, 35, 36, 37; 42, 43, 44, 45, 46, 47; 63, 64), represent sub-exciters of an antenna array (31, 41) of a paraboloidal-type reflector.

## Revendications

1. Procédé de construction et de mise en oeuvre d'une transmission de données utiles entre des véhicules ou avions (20, 28) mobiles l'un par rapport à l'autre, au moyen d'un agencement (11, 21, 31, 41) d'antennes partielles (12, 13, 14, 15, 16, 17 ; 22, 23, 24, 25, 26, 27 ; 32, 33, 34, 35, 36, 37 ; 42, 43, 44, 45, 46, 47 ; 63, 64),
**caractérisé par** les étapes suivantes consistant à :
- mettre en oeuvre un mode de commande à bande étroite en activant une pluralité d'antennes partielles d'un agencement d'antennes (11, 21, 31, 41) d'un véhicule de recherche (20), les antennes partielles étant disposées d'une manière prédéfinie sur chaque véhicule (20, 28) participant dans la transmission de données utiles de telle sorte que la zone d'angle prise en compte pour la transmission de données utiles est couverte par le diagramme d'antennes (11, 21) produit par l'agencement d'antennes partielles,
- transmettre un signal de recherche sur une pluralité des antennes partielles de chaque agencement (11, 21, 31, 41) d'antennes partielles pour déterminer la direction respectivement vers l'émetteur ou le récepteur,
- recevoir un signal d'appel d'un ou de plusieurs autre(s) véhicule(s) (28) participant dans la transmission de données utiles, pour la transmission de données utiles par chaque véhicule (20, 28) participant dans la communication, sélectionner et activer l'antenne partielle de l'agencement d'antennes (11, 21, 31, 41) respectivement disposé sur le véhicule (20, 28) pour laquelle le signal d'appel a été reçu sur un niveau minimum,
- commuter sur la transmission de données utiles à large bande par le biais de l'antenne partielle sélectionnée auparavant dans le mode de commande à bande étroite.

2. Dispositif destiné à mettre en oeuvre le procédé selon la revendication 1, comprenant :
- un certain nombre d'antennes partielles disposées d'une manière prédéfinie sur chaque véhicule (20, 28) participant dans la transmission de données utiles de telle sorte que la zone d'angle prise en compte pour la transmission de données utiles est couverte par le diagramme d'antennes produit par l'agencement d'antennes partielles,
- une branche d'émission (61) associée à chaque antenne partielle (12, 13, 14, 15, 16, 17 ; 22, 23, 24, 25, 26, 27 ; 32, 33, 34, 35, 36, 37 ; 42, 43, 44, 45, 46, 47 ; 63, 64) et qui peut être transmise vers l'émetteur,
- une branche de réception (62) avec un récepteur à large bande (83) qui est relié à une pluralité d'antennes partielles par le biais à chaque fois d'un commutateur (71) et qui permet de recevoir simultanément, dans le mode de commande, des signaux d'appel d'une pluralité d'antennes partielles,
- une unité de commande (77) reliée à une pluralité d'antennes partielles par le biais à chaque fois d'un commutateur (67) qui permet à l'unité de commande (77) d'activer la branche d'émission (61) d'une antenne partielle dès que le récepteur (83) a reçu un signal d'appel d'un point opposé, sachant que la sélection de l'antenne partielle s'effectue en fonction de l'intensité du signal d'appel reçu par cette antenne partielle.

3. Dispositif comprenant un certain nombre d'antennes partielles selon la revendication 2,
**caractérisé en ce que**
les antennes partielles (12, 13, 14, 15, 16, 17 ; 22, 23, 24, 25, 26, 27 ; 32, 33, 34, 35, 36, 37 ; 42, 43, 44, 45, 46, 47 ; 63, 64) représentent des excitateurs partiels d'un agencement d'antennes (31, 41) d'un miroir parabolique.
